(19) Europäisches Patentamt
European Patent Office
Office européen des brevets

(11) Veröffentlichungsnummer: **0 078 007**
**B1**

# (12) EUROPÄISCHE PATENTSCHRIFT

(45) Veröffentlichungstag der Patentschrift: **25.09.85**

(51) Int. Cl.⁴: **C 09 B 33/00,** C 09 B 45/24 // D06P1/02, D06P3/02, D21H1/46

(21) Anmeldenummer: **82109673.2**

(22) Anmeldetag: **20.10.82**

(54) **Metallkomplexe von Polyazofarbstoffen.**

(30) Priorität: **28.10.81 DE 3142608**

(43) Veröffentlichungstag der Anmeldung: **04.05.83 Patentblatt 83/18**

(45) Bekanntmachung des Hinweises auf die Patenterteilung: **25.09.85 Patentblatt 85/39**

(84) Benannte Vertragsstaaten: **CH DE FR GB IT LI**

(56) Entgegenhaltungen:
**FR - A - 980 276**
**FR - A - 1 012 664**
**FR - A - 2 267 349**
**FR - A - 2 348 925**
**US - A - 2 045 090**

**The Chemistry of Synthetic Dyes (Venkataraman) Band VIII S. 50, 56, 63**

***Die Akte enthält technische Angaben, die nach dem Eingang der Anmeldung eingereicht wurden und die nicht in dieser Patentschrift enthalten sind.***

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Hansen, Guenter, Dr., Alwin-Mittasch-Platz 8, D-6700 Ludwigshafen (DE)**
Erfinder: **Lach, Dietrich, Dr., Gartenweg 16, D-6701 Friedelsheim (DE)**
Erfinder: **Zeidler, Georg, Mutterstadter Strasse 7, D-6701 Dannstadt-Schauernheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 078 007 B1

**Beschreibung**

Die Erfindung betrifft Metallkomplexe von Polyazofarbstoffen der allgemeinen Formel

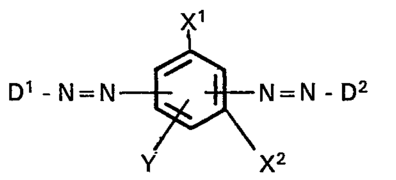

I,

in der

$D^1$ der Rest einer Diazokomponente,

$X^1$ und $X^2$ unabhängig voneinander Hydroxy, Amino oder substituiertes Amino,

Y Wasserstoff, Chlor, Methyl oder Hydroxysulfonyl,

$D^2$ ein Rest der Formel

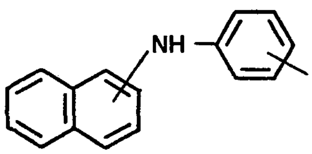

oder

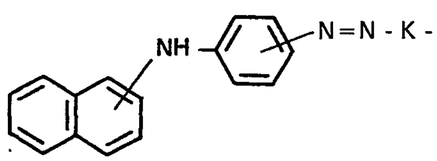

sind,

wobei

K der Rest einer Kupplungskomponente der Benzol- oder Naphthalinreihe ist und wobei die Ringe der Komponenten $D^2$ noch durch Chlor, Methyl, Methoxy, Hydroxysulfonyl, Aminosulfonyl, Hydroxy oder Acylamino substituiert sein können.

Acylaminoreste für die Ringe der Komponenten $D^2$ sind dabei z.B. Acetylamino, Propionylamino oder Benzoylamino.

Die Reste $D^1$ stammen vorwiegend von Diazokomponenten der Benzol- und Naphthalinreihe und können wie üblich z.B. durch Fluor, Chlor, Brom, Nitro, Cyan, substituiertes Sulfonyl, Hydroxysulfonyl, gegebenenfalls substituiertes Aminosulfonyl, Hydroxyl, Carboxyl, Carbonsäureester, Carbonsäureamid, Alkyl, Alkoxy, Phenoxy, substituiertes Amino, Acylamino oder gegebenenfalls durch Chlor, Brom, Nitro oder Hydroxysulfonyl substituiertes Phenylazo substituiert sein.

Die Reste $D^1$ tragen eine metallkomplexbildende Gruppe in Nachbarstellung zur Azobrücke. Als solche komplexbildende Substituenten kommen z.B. Hydroxyl oder Carboxyl in Betracht.

Einzelne Diazokomponenten $D^1 - NH_2$ sind beispielsweise: o-Anisidin, o-Aminobenzoesäure sowie deren $C_1$- bis $C_4$-Alkylester, 2-Amino-3,5-dichlorbenzoesäure, 2-Amino-5-nitrobenzoesäure, 2-Amino-5-hydroxysulfonyl-benzoesäure, 2-Amino-4-hydroxysulfonyl-benzoesäure, 2-Aminophenol, 2-Amino-4-methylphenol, 2-Amino-4-chlorphenol, 2-Amino-4,6-dichlorphenol, 2-Amino-3,4,6-trichlorphenol, 2-Amino-4-nitrophenol, 2-Amino-5-nitrophenol, 2-Amino-4,6-dinitrophenol, 2-Amino-4-chlor-5-nitrophenol, 2-Amino-4-chlor-6-nitrophenol, 2-Amino-4-nitro-6-chlorphenol, 2-Amino-4-methyl-6-nitrophenol, 3-Amino-4-hydroxy-benzolsulfonsäure, 3-Amino-4-hydroxy-benzolsulfonsäureamid, 3-Amino-4-hydroxy-5-chlor-benzolsulfonsäure, 2-Hydroxy-3-amino-5-chlor-benzolsulfonsäure, 2-Hydroxy-3-amino-5-methyl-benzolsulfonsäure, 3-Amino-4-hydroxy-5-nitro-benzolsulfonsäure, 2-Hydroxy-3-amino-5-nitro-benzolsulfonsäure, 2-Amino-phenol-4,6-disulfonsäure, 3-Amino-4-hydroxy-5-carboxyl-benzolsulfonsäure, 2-Amino-3-naphthol, 2-Amino-3-naphthol-6-sulfonsäure, 6-Nitro-1-diazo-2-naphthol-4-sulfonsäure oder 1-Diazo-2-naphthol-4-sulfonsäure.

Substituierte Aminoreste $X^1$ oder $X^2$ sind beispielsweise: Dimethylamino, Diethylamino, Dipropylamino, Morpholino, Piperidino oder Pyrrolidino.

Einzelne Verbindungen $K - NH_2$ sind beispielsweise: 1-Naphthylamin, 1-Naphthylamin-6-sulfonsäure, 1-Naphthylamin-7-sulfonsäure, 1-Amino-2-naphtholethyläther, 1-Naphthylamin-2-ethoxy-6-sulfonsäure, 1-Amino-5-naphthol-7-sulfonsäure, 1-Amino-8-naphthol-6-sulfonsäure, 1-Amino-8-naphthol-2,4-disulfonsäure, 1-Amino-8-naphthol-3,6-disulfonsäure, 1-Amino-8-naphthol-4,6-disulfonsäure, 2-Amino-5-naphthol-7-sulfonsäure, 2-Amino-8-naphthol-6-sulfonsäure, 2-Amino-5-naphthol-1,7-disulfonsäure, 2-Amino-8-naphthol-6,8-disulfonsäure, 3-Methylsulfonylamino-anilin, 2-Methyl-5-methylsulfonylamino-anilin, 2-Methoxy-5-methylsulfonylamino-anilin, 2-Chlor-5-methylsulfonylamino-anilin, 2-Amino-4-methylsulfonylamino-benzolsulfonsäure, 3-Acetylamino-anilin, 2-Methyl-5-acetylamino-anilin oder 3-Methoxy-5-acetylamino-anilin.

Bevorzugte Verbindungen $D^2 - NH_2$ sind z.B.:

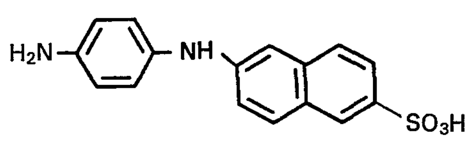

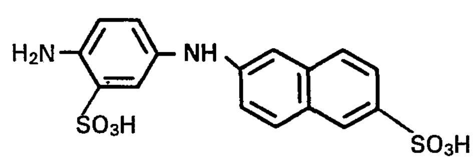

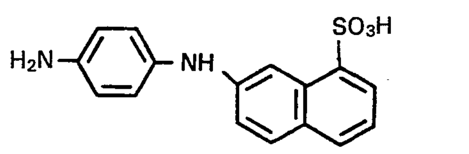

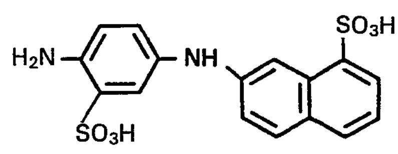

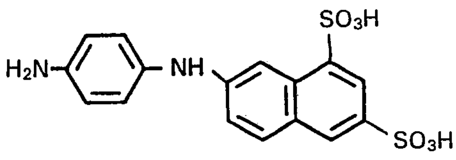

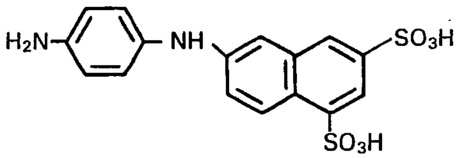

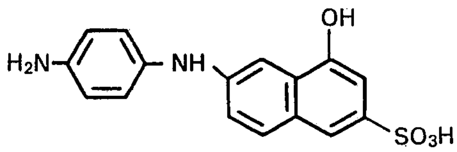

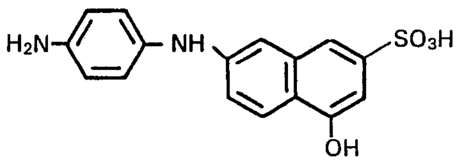

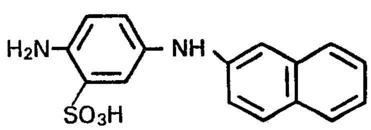

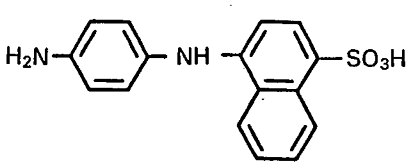

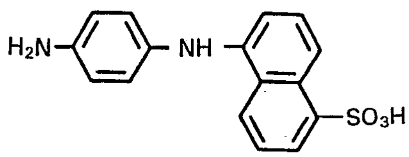

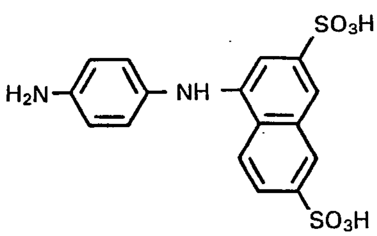

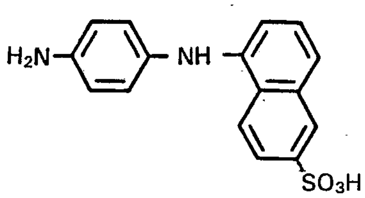

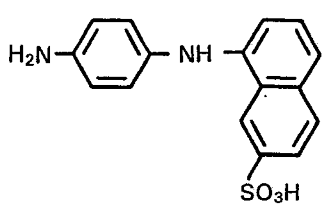

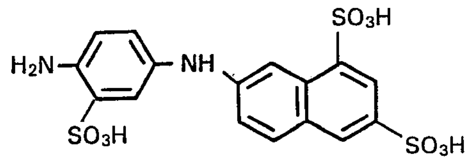

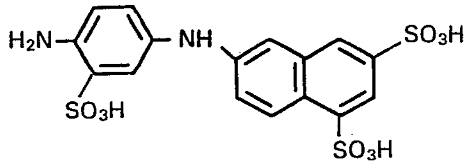

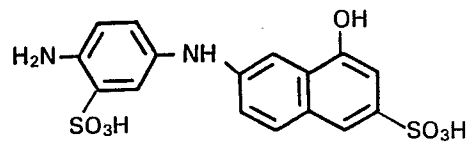

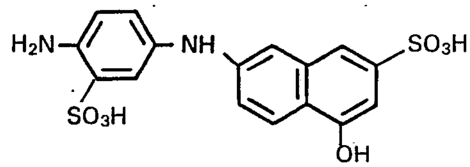

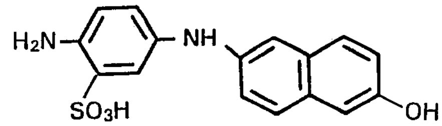

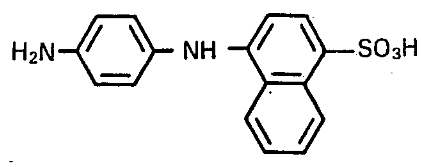

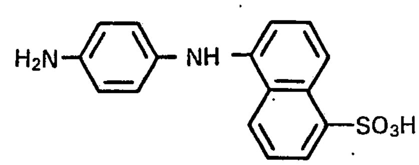

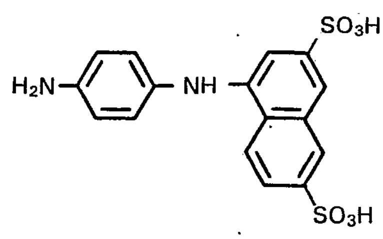

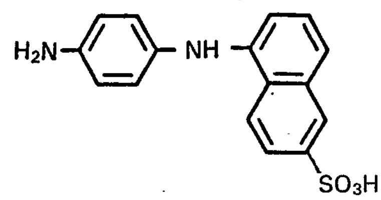

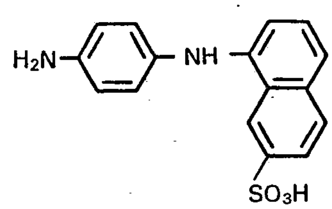

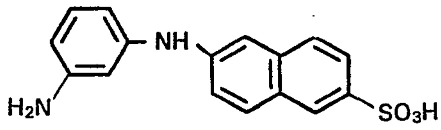

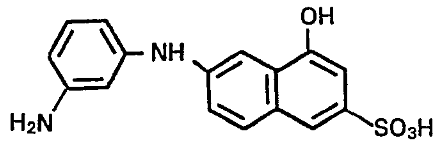

Zur Herstellung der Verbindungen der Formel I kann man z.B. Diazoverbindungen von Aminen der Formel

$D^2$ - $NH_2$

mit Verbindungen der Formel

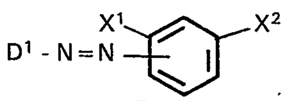

umsetzen und die Reaktionsprodukte der Formel

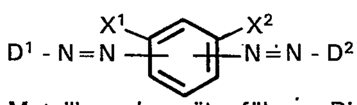

in die Metallkomplexe überführen. Die Reaktionen sind im Prinzip bekannt und können analog zu beschriebenen Methoden vorgenommen werden.

Einzelheiten der Umsetzung können den Beispielen entnommen werden, in denen sich Angaben über Teile und Prozente, sofern nicht anders vermerkt, auf das Gewicht beziehen.

Als Metalle für die Metallkomplexe eignen sich z.B. Mangan, Kobalt, Chrom, Nickel oder Kupfer und insbesondere Eisen.

Von besonderer technischer Bedeutung sind Verbindungen der Formeln I a und I b

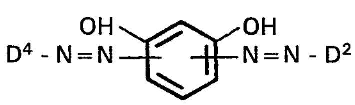

I a

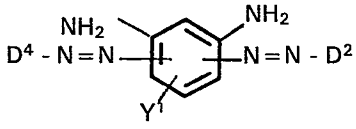

I b

in Form ihrer Eisenkomplexe, wobei $D^4$ der Rest einer Diazokomponente der Anilin- oder Aminonaphthalinreihe mit einer komplexbildenden Hydroxy- oder Carboxylgruppe in Nachbarschaft zur Azobrücke und $Y^1$ Wasserstoff oder Methyl sind und $D^2$ die angegebene Bedeutung hat.

Bevorzugte Komponenten $D^4$ - $NH_2$ sind z.B.: 2-Aminophenol, 2-Amino-4-methylphenol, 2-Amino-4-chlorphenol, 2-Amino-4,6-dichlorphenol, 2-Amino-3,4,6-trichlorphenol, 2-Amino-4-nitrophenol, 2-Amino-5-nitrophenol, 2-Amino-4,6-dinitro-

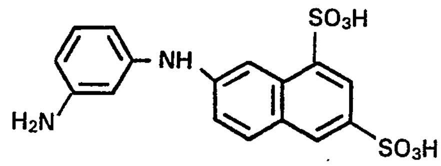

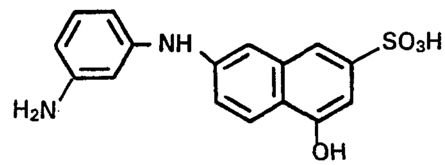

phenol, 2-Amino-4-chlor-5-nitrophenol, 2-Amino-4-chlor-6-nitrophenol, 2-Amino-4-nitro-6-chlorphenol, 2-Amino-4-methyl-6-nitrophenol, 3-Amino-4-hydroxy-benzolsulfonsäure, 3-Amino-4-hydroxy-benzolsulfonsäureamid, 3-Amino-4-hydroxy-5-chlor-benzolsulfonsäure, 2-Hydroxy-3-amino-5-chlor-benzolsulfonsäure, 2-Hydroxy-3-amino-5-methyl-benzolsulfonsäure, 3-Amino-4-hydroxy-5-nitro-benzolsulfonsäure, 2-Hydroxy-3-amino-5-nitro-benzolsulfonsäure, 2-Amino-phenol-4,6-disulfonsäure, 1-Diazo-2-naphthol-4-sulfonsäure, 6-Nitro-1-diazo-2-naphthol-4-sulfonsäure, 2-Amino-benzoesäure, 2-Amino-3,5-dichlorbenzoesäure, 2-Amino-5-nitro-benzoesäure, 2-Amino-4-hydroxysulfonyl-benzoesäure, 2-Amino-5-hydroxysulfonyl-benzoesäure.

Für $D^2$ sind Reste der Formel

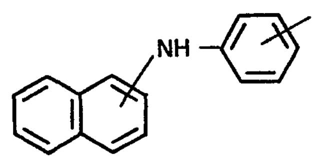

bevorzugt, die noch durch Chlor, Methyl und Hydroxysulfonyl substituiert sein können.

Die Verbindungen der Formel I eignen sich insbesondere in Form ihrer Metallkomplexe zum Färben von Papiermassen sowie zum Färben von stickstoffhaltigen Fasern wie Nylon, Wolle und vorzugsweise Leder. Man erhält in wesentlichen Braunnuancen mit sehr guten Echtheiten, insbesondere auch auf nachgegerbtem Leder.

Bevorzugt sind die Komplexe des Eisens.

Aus der FR-A-2 267 349 sind vergleichbare Farbstoffe bekannt, denen gegenüber sich die erfindungsgemässen Verbindungen jedoch überraschenderweise durch verbesserte Nassechtheiten der nachfixierten Färbungen auf Leder auszeichnen.

*Beispiel 1*

31,4 Teile 2-(4-Aminophenyl)-amino-naphthalin-6-sulfonsäure werden in 100 Volumenteilen Wasser angerührt, mit 25 Volumenteilen 5 n Salzsäure versetzt und bei 0°C durch Zugabe einer wässrigen Lösung von 7 Teilen Natriumnitrit diazotiert. Nach 1 Stunde wird überschüssiges Natriumnitrit durch Zugabe von Amidosulfonsäure entfernt und die Diazolösung anschliessend in eine in 1000 Teilen Wasser angerührte Suspension des Kupplungsproduktes eingegossen, das man durch übliche Diazotierung von 23,4 Teilen 2-Hydroxy-3-amino-5-nitro-benzolsulfonsäure und nachfolgende soda-alkalische

Kupplung auf 11 Teile Resorcin erhält. Nach der Zugabe wird der pH auf 10 angehoben und bis zur beendeten Kupplung gerührt. Anschliessend wird der pH mit 5 n Salzsäure auf 5 gestellt, die Farbstoffsuspension bei 60-70°C mit 34 Teilen Eisen-III-chlorid versetzt und danach mit Natriumacetat auf pH 4 gestellt. Nach einstündigem Rühren bei 60-70°C ist die Metallisierung vollständig, und der komplexierte Farbstoff wird bei pH 1-2 bei 60°C mit Kaliumchlorid ausgesalzen, heiss filtriert und getrocknet. Man erhält den Eisenkomplex der Verbindung der Formel

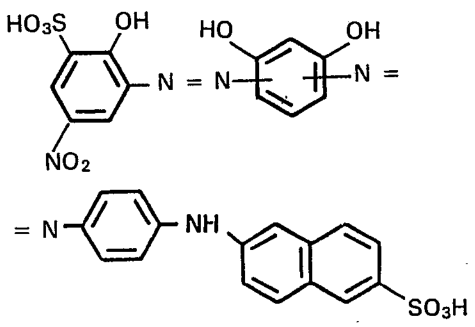

der auf Leder licht- und nassechte braune Färbungen ergibt.

*Beispiel 2*

39,4 Teile 1-(4-Amino-3-hydroxysulfonylphenyl)-amino-naphthalin-4-sulfonsäure werden in 200 Volumenteilen Wasser angerührt, durch Zugabe von 10 Volumenteilen 40%iger Natronlauge gelöst und mit einer wässrigen Lösung von 7 Teilen Natriumnitrit versetzt. Anschliessend wird bei 0°C durch Zugabe von 60 Volumenteilen 5 n Salzsäure sauer gestellt und 30 Minuten gerührt. Nach Entfernung von überschüssigem Nitrit mit Amidosulfonsäure wird bei 0°C zur resultierenden Diazo-Suspension eine auf übliche Weise hergestellte Suspension des Kupplungsproduktes aus 29,5 Teilen 6-Nitro-1-diazo-2-naphthol-4-sulfonsäure und 11 Teilen Resorcin eingegossen, der pH-Wert auf 10 angehoben und bis zur beendeten Kupplung gerührt. Anschliessend wird, wie in Beispiel 1 beschrieben, bei 60-70°C mit 34 Teilen Eisen-III-chlorid komplexiert und das metallisierte Produkt des Farbstoffs der Formel

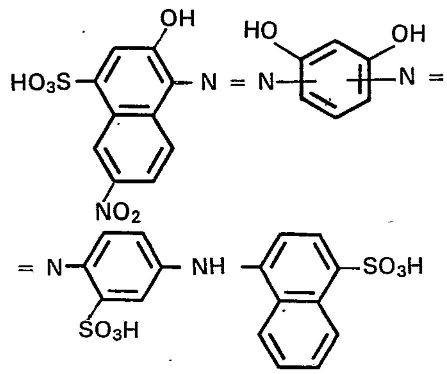

mit Kaliumchlorid ausgesalzen, filtriert und getrocknet. Auf Leder erhält man tiefbraune Färbungen mit guter Licht- und Nassechtheit.

Analog zu den beschriebenen Methoden erhält man auch die in der folgenden Tabelle gekennzeichneten Verbindungen.

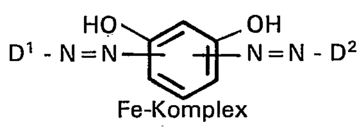

Fe-Komplex

| Beispiel Nr. | $D^1$ | $D^2$ | Färbung auf Leder |
|---|---|---|---|
| 3 | 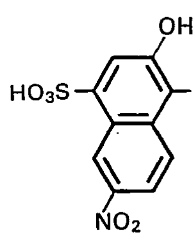 | 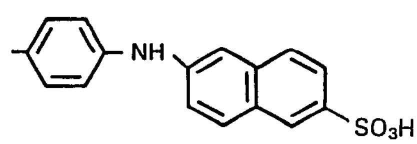 | dunkelbraun |
| 4 | « | 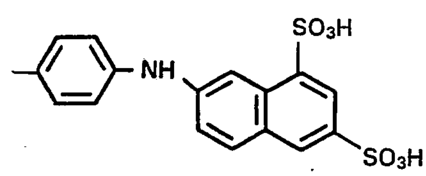 | dunkelbraun |
| 5 | « | 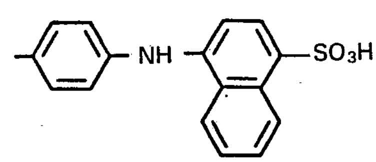 | dunkelbraun |

| Beispiel Nr. | $D^1$ | $D^2$ | Färbung auf Leder |
|---|---|---|---|
| 6 | 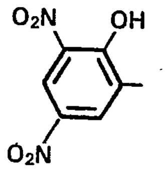 | 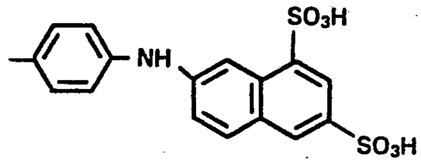 | dunkelbraun |
| 7 | « | 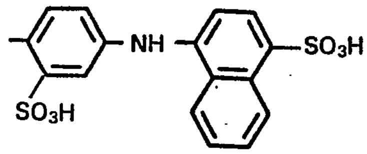 | dunkelbraun |
| 8 | 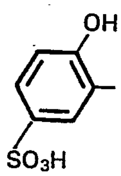 | 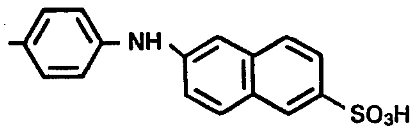 | braun |
| 9 | 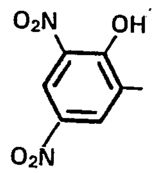 | 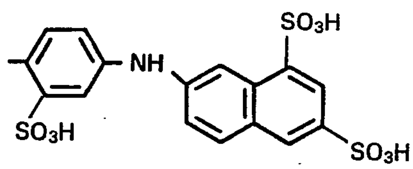 | dunkelbraun |
| 10 | 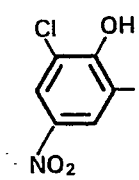 | 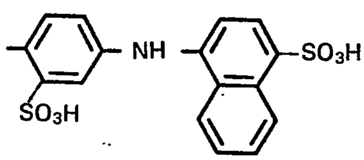 | braun |
| 11 | « | 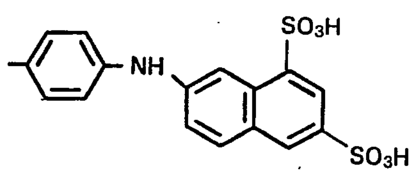 | braun |
| 12 | 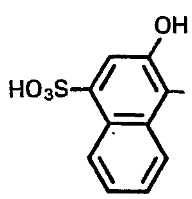 | 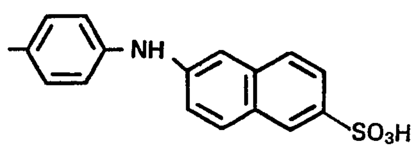 | braun |
| 13 | « | 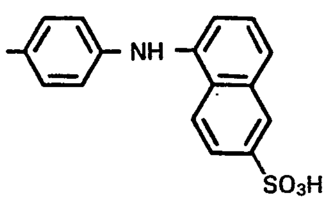 | braun |
| 14 | 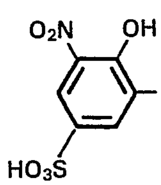 | 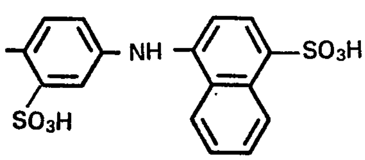 | braun |

| Beispiel Nr. | $D^1$ | $D^2$ | Färbung auf Leder |
|---|---|---|---|
| 15 | 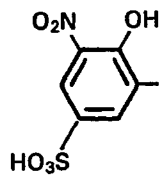 | 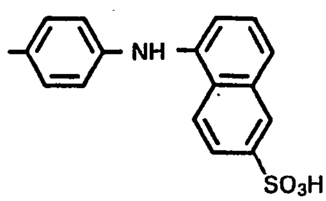 | braun |
| 16 | 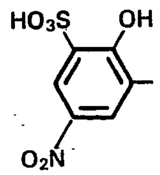 | 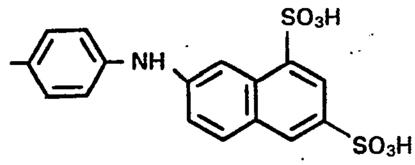 | braun |
| 17 | « | 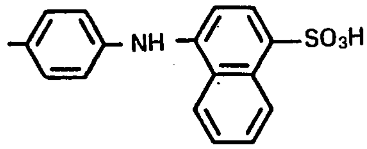 | braun |
| 18 | « | 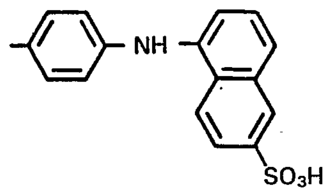 | braun |
| 19 | 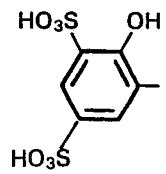 | 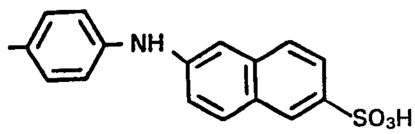 | braun |
| 20 | « | 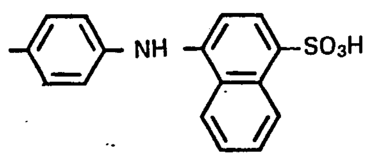 | braun |

*Beispiel 21*

39,4 Teile 2-(4-Aminophenyl)-amino-naphthalin-6,8-disulfonsäure werden in 200 Volumenteilen Wasser angerührt und durch Zugabe von 50 Volumenteilen 5 n Salzsäure gelöst. Bei 0°C wird mit einer wässrigen Lösung von 7 Teilen Natriumnitrit versetzt, zwei Stunden gerührt und anschliessend überschüssiges Nitrit mit Amidosulfonsäure entfernt. Die resultierende Diazolösung wird danach in eine sodaalkalische Lösung von 22,3 Teilen 1-Naphthylamin-6-sulfonsäure in 300 Volumenteilen Wasser eingegossen und der pH-Wert auf 10 angehoben. Nach Ende der Kupplung wird eine wässrige Lösung von 7 Teilen Natriumnitrit hinzugefügt, bei 0°C mit 80 Volumenteilen 5 n Salzsäure sauer gestellt und zwei Stunden bis zur vollständigen Diazotierung gerührt. Überschüssiges Nitrit wird durch Zugabe von Amidosulfonsäure entfernt und die resultierende Diazosuspension bei 0°C mit einer auf übliche Weise hergestellten Suspension des Kupplungsproduktes aus 29,5 Teilen 6-Nitro-1-diazo-2-naphthol-4-sulfonsäure und 11 Teilen Resorcin versetzt. Anschliessend wird der pH-Wert auf 9 angehoben und bis zur beendeten Kupplung gerührt. Metallisierung mit Eisen-III-chlorid und Isolierung analog Beispiel 1 liefert den Eisenkomplex des Farbstoffs der Formel

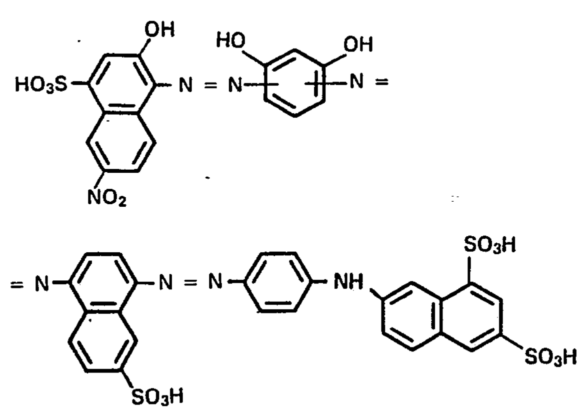

der Leder in dunkelbraunen Tönen mit guter Nass- und Lichtechtheit färbt.

Analog zu der beschriebenen Methode erhält man auch die in der folgenden Tabelle gekennzeichneten Verbindungen.

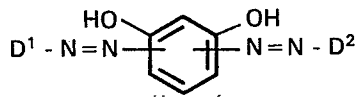

Fe-Komplex

| Beispiel Nr. | $D^1$ | $D^2$ | Färbung auf Leder |
|---|---|---|---|
| 22 | 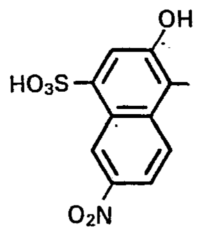 | 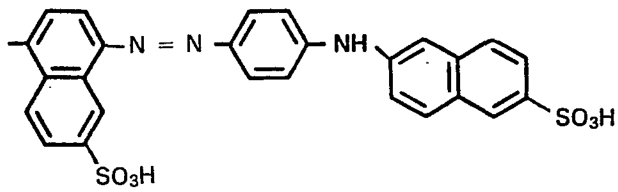 | braun |
| 23 | 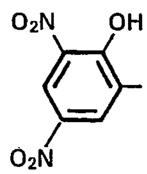 | 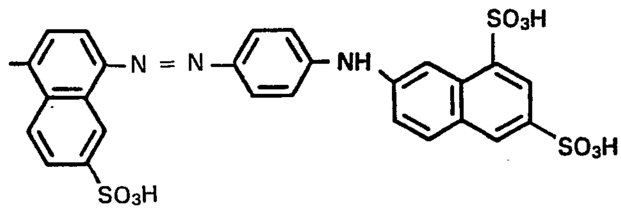 | braun |
| 24 | « | 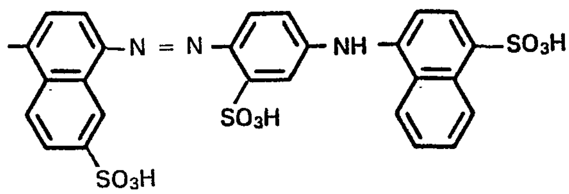 | braun |
| 25 | 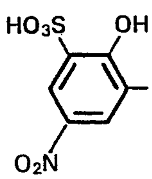 | 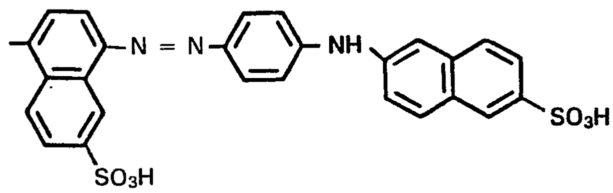 | braun |
| 26 | « | 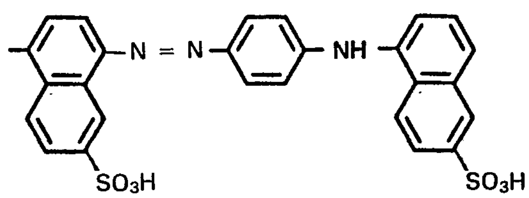 | braun |

*Beispiel 27*

39,4 Teile 2-(4-Aminophenyl)-amino-naphthalin--6,8-disulfonsäure werden analog Beispiel 21 diazotiert und die Diazolösung bei 0°C in eine Suspension von 20 Teilen 2-Methyl-5-methylsulfonylamino-anilin in 500 Volumenteilen Wasser eingegossen. Anschliessend wird der pH-Wert mit 40%iger Natronlauge auf 9-9,5 angehoben und bis zum Ende der Kupplung gerührt. Danach wird mit einer wässrigen Lösung von 7 Teilen Natriumnitrit versetzt, bei 0°C mit 60 Volumenteilen 5 n Salzsäure angesäuert und zwei Stunden gerührt. Nach beendeter Diazotierung wird überschüssiges Natriumnitrit mit Amidosulfonsäure entfernt und die Diazosuspension mit einer Suspension der Kupplungskomponente versetzt, die man durch übliche Diazotierung von 23,4 Teilen 2-Hydroxy-3-amino-5-nitro-benzolsulfonsäure und nachfolgende sodaalkalische Kupplung auf 11 Teile Resorcin erhält. Der pH wird nach der Zugabe auf 9 angehoben und die Reaktionsmischung bis zur beendeten Kupplung gerührt. Metallisierung mit Eisen-III-chlorid und Isolierung wie in Beispiel 1 liefert den Eisenkomplex des Farbstoffs der Formel

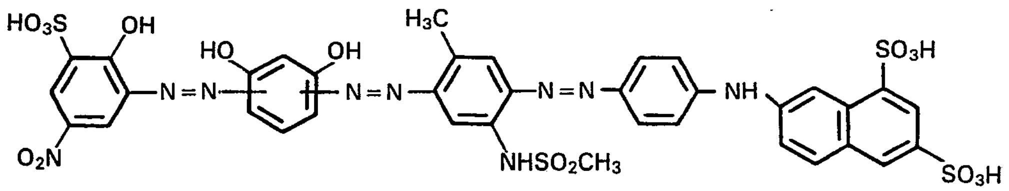

der Leder in gut licht- und nassechten Brauntönen färbt.

Analog zur beschriebenen Methode erhält man auch die in der folgenden Tabelle gekennzeichneten Verbindungen.

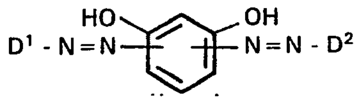

Fe-Komplex

| Beispiel Nr. | D[1] | D[2] | Färbung auf Leder |
|---|---|---|---|
| 28 | 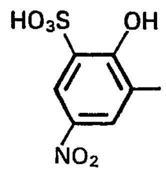 | 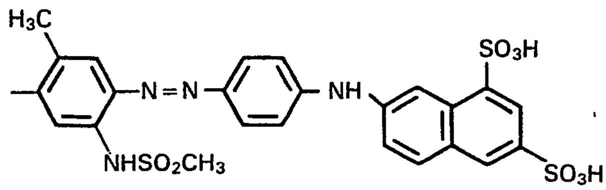 | dunkelbraun |
| 29 | « | 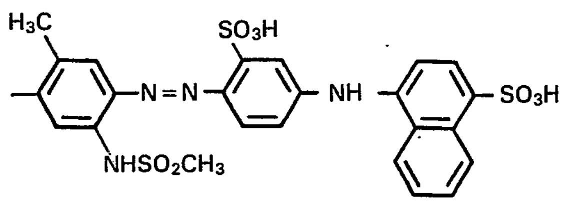 | dunkelbraun |
| 30 | 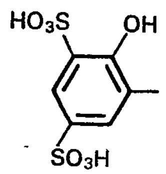 | 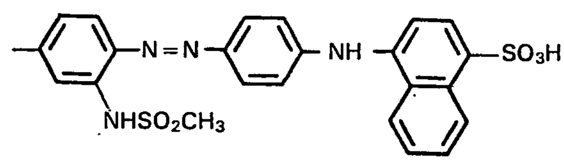 | braun |
| 31 | 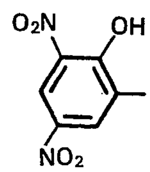 | 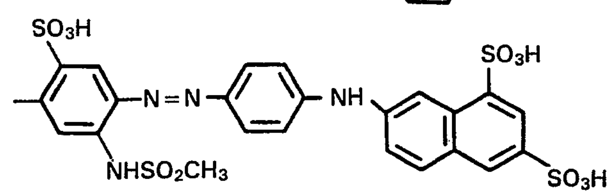 | dunkelbraun |
| 32 | 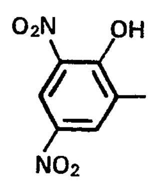 | 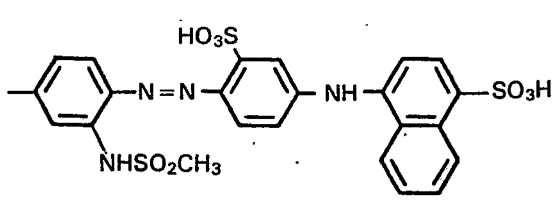 | dunkelbraun |

*Beispiel 33*

39,4 Teile 2-(4-Aminophenyl)-amino-naphthalin-6,8-disulfonsäure werden in 200 Volumenteilen Wasser angerührt, mit 50 Volumenteilen 5 n Salzsäure versetzt und bei 0°C durch Zugabe einer wässrigen Lösung von 7 Teilen Natriumnitrit diazotiert. Nach 1 Stunde wird überschüssiges Natriumnitrit durch Zugabe von Amidosulfonsäure entfernt und die Diazolösung anschliessend in eine sodaalkalische Lösung von 10,4 Teilen m-Phenylendiamin eingegossen. Anschliessend fügt man bei pH 8-9 das Diazoniumsalz aus 19,9 Teilen 1-Amino-4,6-dinitrophenol hinzu.

Nach beendeter Kupplung wird der pH mit 5 n Salzsäure auf 5 gestellt, die Farbstoffsuspension bei 60-70°C mit 34 Teilen Eisen-III-chlorid versetzt und danach mit Natriumacetat auf pH 4 gestellt. Nach einstündigem Rühren bei 60-70°C ist die Metallisierung vollständig und der komplexierte Farbstoff wird bei pH 4 bei 60°C heiss filtriert und getrocknet.

Man erhält den Eisenkomplex der Verbindung der Formel

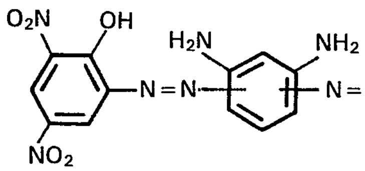

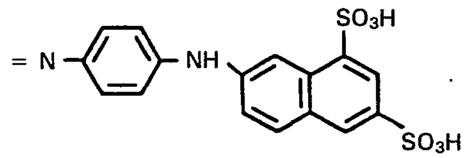

der auf Leder licht- und nassechte braune Färbungen ergibt.

Die in der folgenden Tabelle genannten Farbstoffe lassen sich entsprechend der obigen Vorschrift synthetisieren.

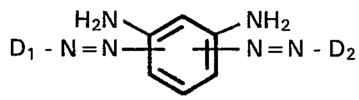

| Beispiel Nr. | $D_1$ | $D_2$ | Färbung auf Leder |
|---|---|---|---|
| 34 | 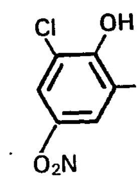 | 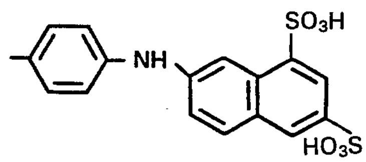 | dunkelbraun |
| 35 | 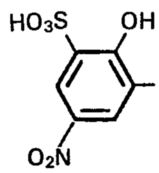 | « | braun |
| 36 | 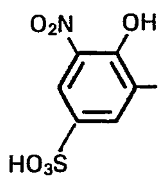 | « | braun |

**Patentansprüche**

1. Metallkomplexe von Polyazofarbstoffen der allgemeinen Formel

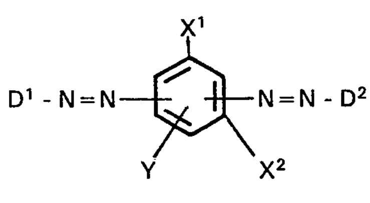 I,

in der
$D^1$ der Rest einer Diazokomponente,
$X^1$ und $X^2$ unabhängig voneinander Hydroxy, Amino oder substituiertes Amino,
Y Wasserstoff, Chlor, Methyl oder Hydroxysulfonyl,
$D^2$ ein Rest der Formel

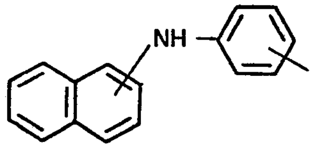

oder

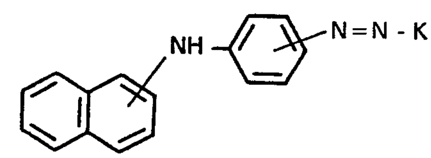

sind,
wobei
K der Rest einer Kupplungskomponente der Benzol- oder Naphthalinreihe ist und wobei die Ringe der Komponenten $D^2$ noch durch Chlor, Methyl, Methoxy, Hydroxysulfonyl, Aminosulfonyl, Hydroxy oder Acylamino substituiert sein können.

2. Verbindungen gemäss Anspruch 1 der Formel

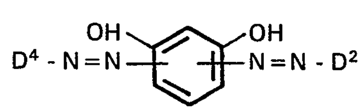

oder

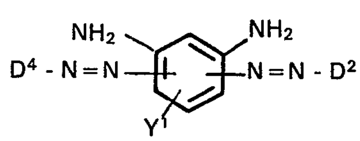

in Form ihrer Eisenkomplexe, wobei $D^4$ der Rest einer Diazokomponente der Anilin- oder Aminonaphthalinreihe mit einer komplexbildenden Hydroxy- oder Carboxylgruppe in Nachbarschaft zur Azobrücke und $Y^1$ Wasserstoff oder Methyl sind und $D^2$ die angegebene Bedeutung hat.

3. Verwendung der Verbindungen gemäss Anspruch 1 zum Färben von Papier oder stickstoffhaltigen Fasern, insbesondere Leder.

4. Farbstoffe gemäss Anspruch 1, wobei $D^1$ in o-Stellung zur Azobrücke durch Hydroxyl oder Carboxyl substituiertes Phenyl oder Naphthyl ist, das noch weiter durch Chlor, Brom, Methyl, Ethyl, Methoxy, Ethoxy, Sulfamoyl, N-$C_1$- bis -$C_4$-alkylsubstituiertes Sulfamoyl, Hydroxysulfonyl oder Nitro substituiert ist.

5. Farbstoffe gemäss Anspruch 1, wobei $D^2$ ein ein- oder zweifach durch Hydroxysulfonyl substituierter Rest der Formel

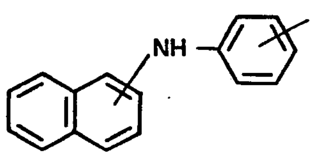

ist.

6. Farbstoffe gemäss Anspruch 1, die 1 bis 3 Hydroxysulfonylgruppen enthalten.

7. Farbstoffe gemäss Anspruch 1 in Form der Eisen- oder Kupferkomplexe.

**Claims**

1. Metal complexes of polyazo dyes of the general formula

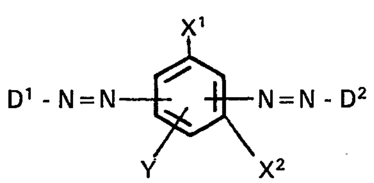

I,

where
$D^1$ is the radical of a diazo component,
$X^1$ and $X^2$, independently of one another, are hydroxyl, amino or substituted amino,
Y is hydrogen, chlorine, methyl or hydroxysulfonyl, and
$D^2$ is a radical of the formula

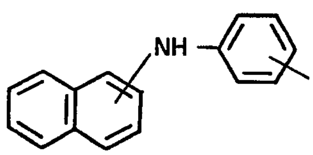

or

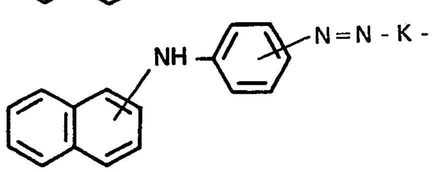

K being the radical of a coupling component of the benzene or naphthalene series, and the rings of component $D^2$ being optionally substituted by chlorine, methyl, methoxy, hydroxysulfonyl, aminosulfonyl, hydroxyl or acylamino.

2. Compounds, as claimed in claim 1, of the formula

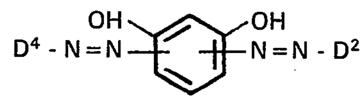

or

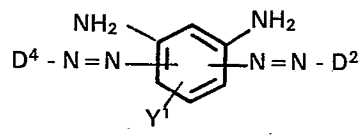

in the form of their iron complexes, $D^4$ being the radical of a diazo component of the aniline or aminonaphthalene series having a complex-forming hydroxyl or carboxyl group in the neighbourhood of the azo bridge, $Y^1$ being hydrogen or methyl, and $D^2$ having the specified meaning.

3. The use of the compounds as claimed in claim 1 for dyeing paper and nitrogen-containing fibres, especially leather.

4. Dyes as claimed in claim 1, wherein $D^1$ ortho to the azo bridge is hydroxyl- or carboxyl-substituted phenyl or naphthyl which is further substituted by chlorine, bromine, methyl, ethyl, methoxy, ethoxy, sulfamoyl, N-$C_1$-$C_4$-alkyl-substituted sulfamoyl, hydroxysulfonyl or nitro.

5. Dyes as claimed in claim 1, wherein $D^2$ is a radical of the formula

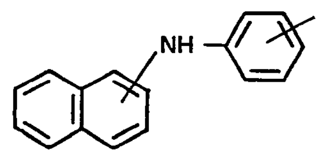

which is mono- or disubstituted by hydroxysulfonyl.

5. Dyes as claimed in claim 1 which contain 1 to 3 hydroxysulfonyl groups.

7. Dyes as claimed in claim 1 in the form of their iron or copper complexes.

**Revendications**

1. Complexes métallifères de colorants polyazoïques de formule générale

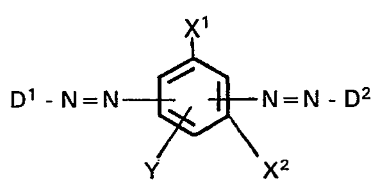

I,

dans laquelle
$D^1$ est le radical d'un composant de diazoïque,
$X^1$ et $X^2$, indépendamment l'un de l'autre, représentent chacun un radical hydroxy, amino ou substitué,
Y est un atome d'hydrogène, de chlore, un radical méthyle ou hydroxysulfonyle,

$D^2$ est un radical de formule

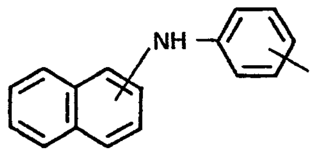

ou

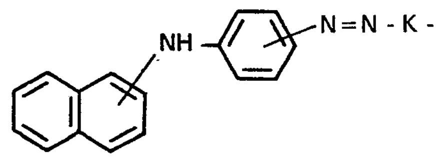

K étant un composant de copulation de la série benzénique ou naphthalénique et les noyaux des composants $D^2$ pouvant être encore substitués par des atomes de Chlore ou des radicaux méthyle, méthoxy, hydroxysulfonyle, aminosulfonyle, hydroxy ou acylamino.

2. Composés selon la revendication 1 de formule

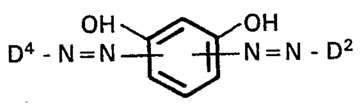

ou

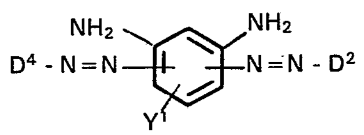

sous la forme de leurs complexes de fer, $D^4$ étant le radical d'un composant de diazoïque de la série de l'aniline ou de l'amino-naphthalène comportant un groupe hydroxy ou carboxyle complexant au voisinage du pont azoïque, $Y^1$ étant un atome d'hydrogène ou un groupe méthyle et $D^2$ ayant la signification données ci-dessus.

3. Utilisation des composés selon la revendication 1 pour la coloration de papier ou de fibres azotées, en particulier de cuir.

4. Colorants selon la revendication 1, dans lesquels $D^1$ est un radical phényle ou naphthyle qui est substitué en position ortho par rapport au pont azoïque par un radical hydroxyle ou carboxyle et qui est encore substitué par un atome de chlore, de brome, un radical méthyle, éthyle, méthoxy, éthoxy, sulfamoyle, sulfamoyle N-substitué par un alkyle en $C_1$ à $C_4$, hydroxysulfonyle ou nitro.

5. Colorants selon la revendication 1, dans lesquels $D^2$ est un radical substitué une ou deux fois par un groupement hydroxysulfonyle, de formule

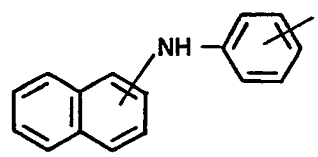

6. Colorants selon la revendication 1 qui contiennent 1 à 3 groupes hydroxysulfonyle.

7. Colorants selon la revendication 1 sous la forme de leurs complexes de fer ou de cuivre.